# DEMANDE DE BREVET EUROPEEN

(11) **EP 4 553 347 A1**
(43) Date de publication de la demande: **14.05.2025**
(21) Numéro de dépôt: 24208096.8
(22) Date de dépôt: 22.10.2024
(51) Int. Cl.: F16H 63/34, F16H 63/38

(54) **MÉCANISME DE BLOCAGE**

(30) Priorité: 07.11.2023 FR 2312094
(71) Demandeur: VALEO EMBRAYAGES, 80009 Amiens (FR)
(72) Inventeur: NERRIERE, Adrien, 80009 AMIENS (FR)
(74) Mandataire: Valeo Powertrain Systems

(57) **Abrégé**

L'invention concerne un mécanisme de blocage comprenant :
-un cliquet mobile (34) monté pivotant entre une position de verrouillage et une position libérée, le cliquet mobile comprenant une surface de came (36) ;
-un dispositif de poussée (38) comportant un suiveur de came (42) se déplaçant sur la surface de came pour déplacer le cliquet mobile de la position libérée vers la position de verrouillage ;
-un levier d'actionnement (3) déplaçant le dispositif de poussée et comportant une première encoche et une deuxième encoche ;
-un organe de positionnement (2) s'engageant dans la première encoche en position de verrouillage et dans la deuxième encoche en position libérée ;
l'organe de positionnement comprenant une première surface de fixation et une deuxième surface de fixation décalées l'une de l'autre axialement.

## Description

### Domaine technique

La présente invention concerne un mécanisme de blocage pour le blocage en rotation d'un arbre d'une chaîne de transmission d'un appareil de mobilité, tel qu'un véhicule automobile par exemple.

### Arrière-plan technologique

Des mécanismes de blocage sont utilisés, par exemple, comme frein de stationnement afin de sécuriser un véhicule automobile à l'arrêt. Dans un tel cas, ils permettent de bloquer en rotation un arbre de transmission du véhicule automobile. De tels mécanismes de blocage sont notamment utilisés dans les véhicules automobiles à transmission automatique, dans les véhicules hybrides ou les véhicules électriques.

Il est connu, notamment du document US2018/0112774, des mécanismes de blocage comprenant un cliquet mobile équipé d'un doigt de verrouillage et monté pivotant sur un carter de transmission entre une position libérée et une position de verrouillage dans laquelle le doigt de verrouillage est inséré dans un évidement de verrouillage solidaire en rotation de l'arbre de transmission à bloquer. Le mécanisme de blocage comporte en outre un dispositif de poussée guidé en translation sur le carter de transmission et comportant un suiveur de came qui coopère avec une surface de came du cliquet de sorte qu'un mouvement de translation du dispositif de poussée entraîne le pivotement du cliquet entre la position libérée et la position de verrouillage.

Un levier d'actionnement permet d'actionner le déplacement du dispositif de poussée. Le levier d'actionnement est monté pivotant sur le carter de transmission et entraîné en rotation, directement ou indirectement, par l'arbre rotor d'un moteur électrique.

Le plus souvent, le levier d'actionnement comporte un pourtour externe disposant d'une première et d'une deuxième encoche de positionnement angulaire. Un organe de positionnement fixé sur le carter de transmission comporte un dispositif élastique, par exemple sous la forme d'une lame flexible, appuyant sur le pourtour externe du levier d'actionnement. L'organe de positionnement est configuré pour s'engager dans la première encoche de positionnement angulaire lorsque le cliquet mobile est en position de verrouillage, et dans la deuxième encoche de positionnement angulaire lorsque le cliquet mobile est en position libérée.

L'organe de positionnement permet ainsi de maintenir de manière stable et précise la position du mécanisme de blocage en position libérée et/ou en position de verrouillage.

Une telle structure du mécanisme de blocage pose plusieurs problèmes techniques :
- En premier lieu, la compacité doit être améliorée afin de pouvoir loger le mécanisme de blocage dans les espaces alloués très restreints des transmissions récentes, notamment des transmissions pour véhicule électrique.
- En second lieu, l'assemblage doit être simplifié. En particulier, les différents composants du mécanisme de blocage peuvent être fixés sur le carter de transmission suivant des axes de fixation non parallèles entre eux, ce qui induit un assemblage de ceux-ci en plusieurs opérations complexes.
- Enfin, ces améliorations de la compacité et de l'assemblage doivent pouvoir être obtenues tout en conservant une résistance mécanique suffisante de l'organe de positionnement qui est soumis aux sollicitations mécaniques survenant lors des phases d'arrêt du véhicule assurées par le mécanisme de blocage.

### Résumé

Dans tout ce qui suit, les adjectifs numéraux ordinaux sont utilisés pour différencier les caractéristiques. Ils ne définissent pas la position d'une caractéristique. Par conséquent, par exemple, une troisième caractéristique d'un produit ne signifie pas que le produit possède une première et/ou une deuxième caractéristique.

Une idée à la base de l'invention est un mécanisme de blocage destiné à bloquer en rotation un arbre d'un véhicule.

Une idée à la base de l'invention est un mécanisme de blocage qui permet de résoudre un ou plusieurs problèmes techniques de l'art antérieur, par exemple les problèmes susmentionnés.

L'invention concerne un mécanisme de blocage apte à être monté dans un carter de transmission pour bloquer en rotation un arbre d'un véhicule équipé d'au moins un évidement de verrouillage, le mécanisme de blocage comprenant :
- un cliquet mobile comprenant un doigt de verrouillage, le cliquet mobile étant monté pivotant autour d'un axe de pivotement entre une position de verrouillage dans laquelle le doigt de verrouillage est engagé dans l'évidement de verrouillage et une position libérée dans laquelle le doigt de verrouillage est désengagé dudit évidement de verrouillage, le cliquet mobile comprenant une surface de came ;
- un dispositif de poussée comportant un suiveur de came apte à se déplacer sur la surface de came afin de déplacer le cliquet mobile de la position libérée vers la position de verrouillage ;
- un levier d'actionnement monté pivotant autour d'un axe d'actionnement et configuré pour déplacer le dispositif de poussée, le levier d'actionnement comprenant un pourtour externe comportant une première encoche de positionnement angulaire et une deuxième encoche de positionnement angulaire ; et
- un organe de positionnement coopérant avec le pourtour externe du levier d'actionnement, l'organe de positionnement comportant une surface d'appui configurée pour s'engager dans la première encoche de positionnement angulaire lorsque le cliquet mobile est en position de verrouillage et dans la deuxième encoche de positionnement angulaire lorsque le cliquet mobile est en position libérée ;
l'organe de positionnement comprenant une première surface de fixation et une deuxième surface de fixation, la première surface de fixation et la deuxième surface de fixation étant décalées l'une de l'autre dans une direction parallèle à l'axe d'actionnement.

Selon un autre aspect de l'invention, l'invention concerne un mécanisme de blocage apte à être monté dans un carter de transmission pour bloquer en rotation un arbre d'un véhicule équipé d'au moins un évidement de verrouillage, le mécanisme de blocage comprenant :
- un cliquet mobile comprenant un doigt de verrouillage, le cliquet mobile étant apte à être monté pivotant autour d'un axe de pivotement sur le carter de transmission entre une position de verrouillage dans laquelle le doigt de verrouillage est engagé dans l'évidement de verrouillage et une position libérée dans laquelle le doigt de verrouillage est désengagé dudit évidement de verrouillage, le cliquet mobile comprenant une surface de came ;
- un dispositif de poussée comportant un suiveur de came apte à se déplacer sur la surface de came afin de déplacer le cliquet mobile de la position libérée vers la position de verrouillage ;
- un levier d'actionnement étant apte à être monté pivotant autour d'un axe d'actionnement sur le carter de transmission et étant configuré pour déplacer le dispositif de poussée, le levier d'actionnement comprenant un pourtour externe comportant une première encoche de positionnement angulaire et une deuxième encoche de positionnement angulaire ; et
- un organe de positionnement coopérant avec le pourtour externe du levier d'actionnement, l'organe de positionnement comportant une surface d'appui configurée pour s'engager dans la première encoche de positionnement angulaire lorsque le cliquet mobile est en position de verrouillage et dans la deuxième encoche de positionnement angulaire lorsque le cliquet mobile est en position libérée ;
l'organe de positionnement comprenant une première surface de fixation et une deuxième surface de fixation aptes à être fixées sur le carter de transmission, la première surface de fixation et la deuxième surface de fixation étant décalées l'une de l'autre dans une direction parallèle à l'axe d'actionnement.

Au sens de la présente demande :
- « axialement » signifie « parallèlement à l'axe d'actionnement »;
- « radialement » signifie « le long d'un axe appartenant à un plan orthogonal à l'axe d'actionnement et coupant cet axe d'actionnement »;
- « angulairement » ou « circonférentiellement » signifie « autour de l'axe d'actionnement »;
- les termes "externe" et "interne" sont utilisés pour définir la position relative d'un composant par rapport à l'axe de rotation pour lequel il est concentrique, un composant proche dudit axe est ainsi qualifié d'interne par opposition à un composant externe situé radialement en périphérie;
- deux pièces sont dites « fixées » ou « rigidement solidaires » lorsqu'elles sont en permanence immobilisées l'une par rapport à l'autre, cette immobilisation pouvant résulter d'une fixation de la première pièce sur la deuxième pièce directement ou par l'intermédiaire d'une ou plusieurs pièces intermédiaires.

Grâce à l'architecture selon l'invention, l'assemblage du levier d'actionnement et de l'organe de positionnement est effectué suivant des axes parallèles. Ils peuvent donc être aisément montés ensemble pendant la même opération d'assemblage. Le décalage axial de la première surface de fixation par rapport à la deuxième surface de fixation simplifie l'assemblage de l'organe de positionnement en le réalisant de façon séquentielle, avec dans un premier temps un pré-positionnement via la première surface de fixation, la première surface de fixation ayant par exemple un trou pour s'insérer sur une goupille de centrage fixée au carter de transmission, puis dans un second temps une immobilisation complète via la deuxième surface de fixation, au moyen par exemple d'une vis liant la deuxième surface de fixation au carter de transmission.

Selon une caractéristique supplémentaire de l'invention, la première surface de fixation et la deuxième surface de fixation sont sensiblement parallèles.

Selon une caractéristique supplémentaire de l'invention, la première surface de fixation et la deuxième surface de fixation sont sensiblement perpendiculaires à l'axe d'actionnement.

Grâce à ces deux dernières caractéristiques, la fixation de la première surface de fixation et de la deuxième surface de fixation peut être réalisée par un moyen de fixation adapté se déplaçant suivant un même axe parallèle à l'axe d'actionnement, ce qui simplifie la mise en position et l'assemblage de l'organe de positionnement sur le carter de transmission.

Selon une caractéristique supplémentaire de l'invention, la première surface de fixation et la deuxième surface de fixation sont sensiblement planes.

Selon une caractéristique supplémentaire de l'invention, la première surface de fixation et la deuxième surface de fixation sont distinctes.

Selon une caractéristique supplémentaire de l'invention, l'axe d'actionnement du levier d'actionnement est parallèle à l'axe de pivotement du cliquet mobile.

Grâce à cette caractéristique, l'assemblage peut être encore plus simplifié car tous les composants du mécanisme de blocage se montant sur le carter de transmission peuvent se monter suivant des axes parallèles, ils peuvent donc être tous montés pendant la même opération d'assemblage.

Selon une caractéristique supplémentaire de l'invention, le pourtour externe du levier d'actionnement est constitué de surfaces parallèles à l'axe d'actionnement.

Selon une caractéristique supplémentaire de l'invention, le levier d'actionnement est formé d'une plaque découpée à partir d'une tôle d'épaisseur constante, le pourtour externe du levier d'actionnement étant obtenu à partir d'une tranche de découpe de la plaque.

Ainsi, le levier d'actionnement peut être réalisé à partir d'un processus de fabrication simple et économique.

Selon une caractéristique supplémentaire de l'invention, l'organe de positionnement comporte une lame flexible exerçant un effort, directement ou indirectement, sur le pourtour externe du levier d'actionnement.

La lame flexible est une solution simple et économique qui permet une détermination aisée d'une géométrie compatible avec un espace disponible restreint tout en assurant une raideur et une résistance mécanique suffisante pour maintenir le mécanisme de blocage en position.

Selon une caractéristique supplémentaire de l'invention, la lame flexible se déforme élastiquement et/ou radialement en parcourant le pourtour externe du levier d'actionnement.

Selon une caractéristique supplémentaire de l'invention, l'organe de positionnement comporte un élément roulant agencé sur la lame flexible, l'élément roulant étant configuré pour rouler sur le pourtour externe du levier d'actionnement.

L'élément roulant permet d'améliorer la durabilité du mécanisme de blocage en limitant les usures et les frottements relatifs entre le pourtour externe du levier d'actionnement et la lame flexible.

Avantageusement, l'élément roulant peut être un rouleau cylindrique. Une forme complémentaire peut être alors aménagée sur l'extrémité de la lame flexible afin de constituer une liaison pivot entre le rouleau cylindrique et la lame flexible.

Selon une caractéristique supplémentaire de l'invention, la première surface de fixation et la deuxième surface de fixation sont réalisées sous forme d'une première patte pliée et d'une deuxième patte pliée, les première et deuxième pattes pliées étant pliées à un angle de 90° à partir d'une première portion de la lame flexible et positionnées axialement de part et d'autre de ladite première portion de la lame flexible.

Grâce à cette dernière caractéristique, la lame flexible dispose d'une zone de fixation de part et d'autre de sa partie fléchissante, ce qui a pour effet de répartir de façon homogène la reprise des efforts dans la lame flexible et ainsi réduire les contraintes mécaniques dans celle-ci.

Selon une caractéristique supplémentaire de l'invention, la première patte pliée est pliée dans un sens opposé à la deuxième patte pliée.

Cette dernière caractéristique permet à ce que la première patte pliée ne soit pas en vis-à-vis axialement de la deuxième patte pliée. Ainsi la première patte pliée n'entrave pas le passage d'un outil de fixation pour accéder à la deuxième patte pliée, et inversement. L'accès à la première et à la deuxième patte pliée pour la fixation de l'organe de positionnement s'en trouve simplifié.

Selon une caractéristique supplémentaire de l'invention, le mécanisme de blocage comprend :
- un premier moyen de fixation, notamment une goupille de centrage, coopérant avec la première surface de fixation pour bloquer le déplacement de l'organe de positionnement dans un plan perpendiculaire à l'axe d'actionnement ; et
- un deuxième moyen de fixation, notamment une vis, coopérant avec la deuxième surface de fixation pour bloquer le déplacement de l'organe de positionnement suivant un axe parallèle à l'axe d'actionnement.

La fixation de l'organe de positionnement selon cette dernière caractéristique peut être réalisée par rapport à tout type de composant sur lequel le mécanisme de blocage peut être monté, notamment le carter de transmission.

Ainsi la fixation de l'organe de positionnement est réalisée de manière isostatique. Autrement dit, tous les degrés de liberté de déplacement de l'organe de positionnement sont bloqués, tout en garantissant un assemblage aisé sans risque de déformation de composants.

Selon une caractéristique supplémentaire de l'invention, la première surface de fixation comporte une première découpe, de préférence circulaire, configurée pour être centrée et ajustée sur une goupille de centrage, un premier jeu diamétral étant défini entre la découpe circulaire et la goupille de centrage, de préférence le premier jeu diamétral étant compris entre 0,05 et 0,2 mm.

Selon une caractéristique supplémentaire de l'invention, la deuxième surface de fixation comporte une deuxième découpe, de préférence circulaire, configurée pour coopérer avec le corps d'une vis, un deuxième jeu diamétral étant défini entre la deuxième découpe et le corps de la vis, le deuxième jeu diamétral étant supérieur au premier jeu diamétral, de préférence le deuxième jeu diamétral étant supérieur à 0,5 mm.

Grâce à cette dernière caractéristique, le risque d'impossibilité d'assemblage du fait des tolérances de fabrication des composants est supprimé.

Selon une caractéristique supplémentaire de l'invention, l'organe de positionnement est fixé sur le carter de transmission.

Selon une caractéristique supplémentaire de l'invention, le levier d'actionnement est monté pivotant sur le carter de transmission.

Selon une caractéristique supplémentaire de l'invention, le cliquet mobile est monté pivotant sur le carter de transmission.

Selon une caractéristique supplémentaire de l'invention, le carter de transmission comporte des surfaces d'appui positionnées par complémentarité de forme en vis-à-vis des première et deuxième surfaces de fixation de l'organe de positionnement.

Selon une caractéristique supplémentaire de l'invention, la lame flexible a une forme configurée pour laisser libre un passage suivant un axe parallèle à l'axe d'actionnement permettant l'assemblage du premier et du deuxième moyen de fixation.

Cette dernière caractéristique permet de définir la forme générale de la lame flexible afin qu'aucune partie de celle-ci n'entrave le passage d'un outil de fixation. L'accès à la première et à la deuxième surface de fixation pour la fixation de l'organe de positionnement s'en trouve simplifié.

Selon une caractéristique supplémentaire de l'invention, la lame flexible comprend une forme repliée sur elle-même pour constituer une forme en V.

Par forme en V, on entend que la lame flexible présente sensiblement en vue de profil la forme de la lettre V en majuscule, la forme de la lettre en V en majuscule comprenant deux branches inclinées entre elles d'un angle compris entre 0° et 80°, l'intersection des deux branches étant pointue ou rayonnée.

La forme en V permet d'obtenir, dans un volume disponible restreint, une lame flexible ayant une partie fléchissante de longueur importante. En comparaison avec les lames flexibles ayant une partie fléchissante plate ou faiblement pliée de l'art antérieur, la lame en V peut permettre d'obtenir une raideur et une résistance mécanique équivalente, tout en occupant un encombrement plus faible, typiquement une réduction de 20 à 60 % d'encombrement circonférentiellement.

Selon une caractéristique supplémentaire de l'invention, la forme en V comprend une première paroi plane et une deuxième paroi plane, un angle de pliage étant établi entre la première paroi plane et la deuxième paroi plane, l'angle de pliage étant compris entre 0° et 80°, l'angle de pliage étant compris de préférence entre 0° et 40°.

L'angle de pliage selon cette dernière caractéristique permet de minimiser l'encombrement de la lame flexible radialement. La valeur d'angle choisie permet également d'ajuster la valeur de l'effort qu'exerce la lame flexible sur le pourtour externe du levier d'actionnement.

Selon une caractéristique supplémentaire de l'invention, la première paroi plane et la deuxième paroi plane sont parallèles à l'axe d'actionnement.

Selon une caractéristique supplémentaire de l'invention, une paroi incurvée relie la première paroi plane et la deuxième paroi plane.

Selon une caractéristique supplémentaire de l'invention, la paroi incurvée a un rayon de courbure compris entre 2 mm et 10 mm.

Selon une caractéristique supplémentaire de l'invention, un rayon de courbure de la paroi incurvée, une épaisseur de la lame flexible et un ratio égal au rapport entre le rayon de courbure et l'épaisseur de la lame flexible sont établis, le ratio étant compris entre 2 et 8.

La paroi incurvée telle que définie suivant ces trois dernières caractéristiques permet d'adapter la raideur de la lame flexible tout en limitant les concentrations de contraintes mécaniques dans celle-ci.

Selon une caractéristique supplémentaire de l'invention, la lame flexible est formée d'un seul tenant dans une bande de matériau métallique, notamment dans une tôle d'acier.

Ainsi le processus de fabrication est simple et économique : à partir d'une tôle d'épaisseur constante, typiquement comprise entre 0,5 et 2 mm, une opération de découpage, par exemple de découpage par presse, est réalisée pour découper les contours extérieurs et intérieurs de la lame flexible, suivie d'une opération de pliage pour lui conférer la forme en V.

Selon une caractéristique supplémentaire de l'invention, la lame flexible est fabriquée dans un métal ayant subi un traitement de durcissement, notamment une carbonitruration, une nitruration, une cémentation ou une trempe.

Cette caractéristique permet d'augmenter la résistance mécanique de la lame flexible nécessaire pour résister aux sollicitations mécaniques transmises au mécanisme de blocage.

Selon une caractéristique supplémentaire de l'invention, l'organe de positionnement comprend un dispositif élastique qui coopère avec un élément roulant, ledit élément roulant coopérant avec le pourtour externe du levier d'actionnement.

Selon une caractéristique supplémentaire de l'invention, le dispositif élastique présente une raideur comprise entre 10 et 50 N/mm.

Selon une caractéristique supplémentaire de l'invention, le dispositif élastique effectue radialement un déplacement radial lorsque l'organe de positionnement coopère avec le pourtour externe du levier d'actionnement, le déplacement radial variant entre 1 et 10 mm quelle que soit la position angulaire du levier d'actionnement.

Selon un autre mode de réalisation de l'invention, l'organe de positionnement est un poussoir à ressort, le poussoir à ressort comportant un ressort hélicoïdal exerçant un effort sur une bille, ladite bille coopérant avec le pourtour externe du levier d'actionnement

Selon une caractéristique supplémentaire de l'invention, le levier d'actionnement est entraîné en rotation, directement ou indirectement, par un arbre rotor d'un moteur électrique.

Selon un autre de ses aspects, l'invention a pour objet un système de transmission comprenant un arbre équipé d'au moins un évidement de verrouillage et un mécanisme de blocage tel que décrit précédemment.

L'invention concerne en outre un véhicule automobile comprenant un système de transmission tel que défini précédemment.

### Brève description des figures

La figure 1 est une vue de face d'un mécanisme de blocage selon un mode de réalisation de l'invention.
La figure 2 est une vue en perspective de la figure 1.
La figure 3 est une vue en perspective d'une partie du mécanisme de blocage selon un mode de réalisation de l'invention.
La figure 4 est une vue de dessus de la figure 3.
La figure 5 est une vue en perspective d'un organe de positionnement selon un mode de réalisation de l'invention.
La figure 6 est une vue de face de la figure 5.
La figure 7 est une vue en perspective d'un levier d'actionnement selon un mode de réalisation de l'invention.

### Description des modes de réalisation

Sur toutes les figures, les éléments identiques ou assurant la même fonction portent les mêmes numéros de référence. Les réalisations suivantes sont des exemples. Bien que la description se réfère à un ou plusieurs modes de réalisation, ceci ne signifie pas nécessairement que chaque référence concerne le même mode de réalisation ou que les caractéristiques s'appliquent seulement à un seul mode de réalisation. De simples caractéristiques de différents modes de réalisation peuvent également être combinées ou interchangées pour fournir d'autres réalisations.

Un mécanisme de blocage en rotation d'un arbre d'un véhicule comprend notamment : un cliquet mobile, un dispositif de poussée, un levier d'actionnement et un organe de positionnement. Le mécanisme de blocage est notamment destiné à immobiliser un véhicule, par exemple une voiture, dans un état stationné. Les différents éléments du mécanisme de blocage de réalisation seront présentés ci-dessous.

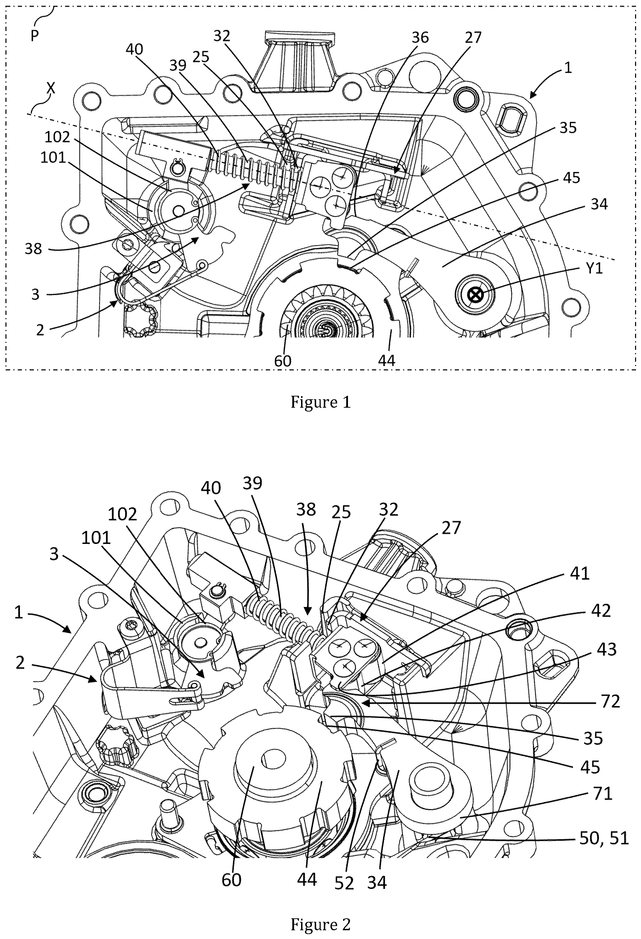

Les figures 1 et 2 illustrent un mécanisme de blocage selon un mode de réalisation de l'invention. Dans ces figures, le mécanisme de blocage comprend un cliquet mobile 34 situé dans un carter de transmission 1 (partiellement représenté). Le cliquet mobile 34 peut être de forme allongée et peut présenter une première extrémité 71 et une deuxième extrémité 72 distante de la première extrémité 71.

La première extrémité 71 permet par exemple la fixation du cliquet mobile 34 sur le carter de transmission 1 tout en permettant le mouvement en rotation dudit cliquet mobile 34. C'est-à-dire que le cliquet mobile est monté pivotant dans un plan P autour d'un axe de pivotement Y1.

La deuxième extrémité 72 peut comprendre une surface de came 36 située sur une première face latérale du cliquet mobile 34. La deuxième extrémité 72 peut comprendre en outre un doigt de verrouillage 35 faisant sailli depuis une deuxième face latérale du cliquet mobile 34. Le doigt de verrouillage 35 est destiné, lorsque le mécanisme de blocage est enclenché, à s'insérer dans un évidement de verrouillage 45. L'évidement de verrouillage 45 est par exemple situé sur une roue à rochet 44 qui est apte à recevoir ledit doigt de verrouillage 35, et qui est fixée solidaire en rotation de l'arbre de transmission 60 (partiellement représenté) destiné à être bloquer en rotation.

Ainsi, le mécanisme de blocage varie entre une position de verrouillage dans laquelle le doigt de verrouillage 35 est engagé dans l'évidement de verrouillage 45 et une position libérée dans laquelle le doigt de verrouillage 35 est désengagé dudit évidement de verrouillage 45. Dans les figures 1 et 2, le mécanisme de blocage en rotation d'un arbre est représenté dans une position libérée.

Le cliquet mobile 34 peut comprendre en outre un ressort de torsion 50. Le ressort de torsion 50 est par exemple enroulé au niveau de la première extrémité 71 du cliquet mobile 34. Le ressort de torsion 50 peut comprendre une première extrémité 51 qui est en appui contre une surface d'appui du carter de transmission 1 et une deuxième extrémité 52 qui est en appui contre une surface d'appui du cliquet mobile 34. Le ressort de torsion 50 est agencé pour exercer un effort de rappel sur le cliquet mobile 34 afin de le rappeler vers la position libérée.

Le mécanisme de blocage comprend en outre un dispositif de poussée 38. Le dispositif de poussée 38 peut être guidé selon une direction longitudinale X par un rail de guidage 27 logé dans le carter de transmission 1. Dans les cas où le dispositif de poussée 38 est renvoyé en arrière par le cliquet mobile 34 lors de phases dynamiques, le dispositif de poussée 38 peut venir en butée contre une paroi latérale du rail de guidage 27, qui forme ainsi une butée anti-retour pour le dispositif de poussée 38. Le dispositif de poussée 38, est dans ce cas envoyé contre le cliquet mobile 34 par une force de rappel exercée par un ressort de traction 40. Cet effet peut se produire par exemple lors de tentatives d'engagement à trop haute vitesse. Au-delà d'une vitesse seuil, par exemple comprise entre 3 km/h et 5 km/h, le cliquet mobile 34 rebondit pour empêcher l'engagement, le dispositif de poussée 38 est alors renvoyé en butée. Le ressort 40 entoure une tige 39 du dispositif de poussée qui se développe à travers une première encoche 25 du carter de transmission 1 et une deuxième encoche 32 du rail de guidage 27.

Le dispositif de poussée 38 peut se présenter sous la forme d'un chariot mobile qui comprend par exemple un premier galet mobile 41 apte à se déplacer le long d'une paroi longitudinale 30 du rail de guidage 27. Le dispositif de poussée 38 peut comprendre en outre un suiveur de came 42 comportant un deuxième galet mobile qui est en contact avec la surface de came 36 du cliquet mobile 34 et apte à se déplacer le long de cette surface de came 36.

Le dispositif de poussée 38 peut comprendre en outre un ergot 43 situé au niveau de la deuxième extrémité du cliquet mobile 34. L'ergot 43 est destiné à retenir le cliquet mobile 34 dans le plan P.

Pour déplacer le cliquet mobile 34 dans la position de verrouillage, la tige 39 peut être déplacée à travers la deuxième encoche 32 du rail de guidage 27 déplaçant ainsi le dispositif de poussée 38 selon la direction longitudinale X. Le déplacement du dispositif de poussée 38 peut entraîner le déplacement du premier galet mobile 41 le long du rail de guidage 27 et le déplacement du suiveur de came 42 le long de la surface de came 36 du cliquet mobile 34. La surface de came 36 peut présenter une pente et le dispositif de poussée 38 peut donc exercer via son déplacement, une pression en direction de la surface de came 36 du cliquet mobile 34. Cette pression peut engendrer un déplacement en rotation de la deuxième extrémité du cliquet mobile 34 en direction d'un évidement de verrouillage de telle sorte que le doigt de verrouillage 35 peut s'engager dans un évidement de verrouillage présent par exemple sur une roue à rochet 44.

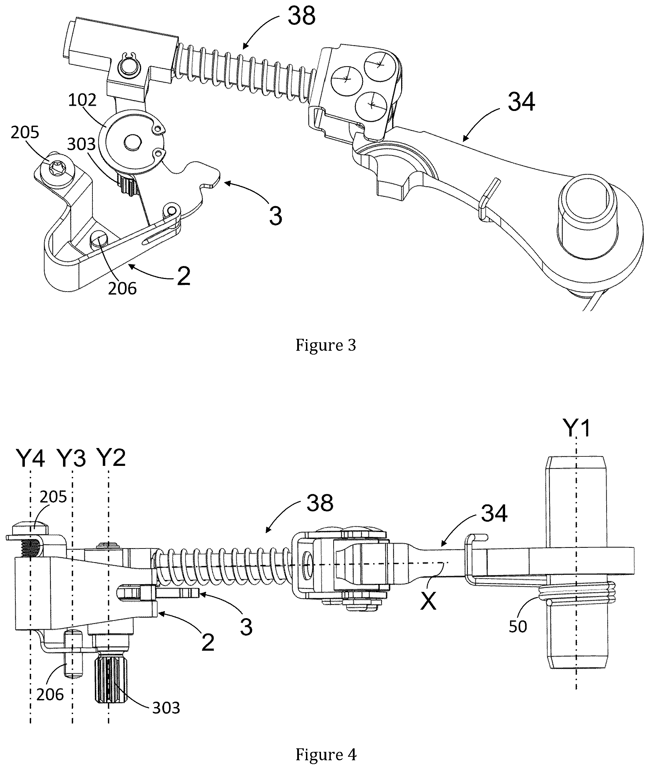

Les figures 3 à 7 illustrent plus particulièrement un levier d'actionnement 3 et un organe de positionnement 2 du mécanisme de blocage selon un mode de réalisation de l'invention.

Le levier d'actionnement 3 est monté pivotant autour d'un axe d'actionnement Y2 sur le carter de transmission 1. Un logement 101 (visible sur la figure 2) aménagé dans le carter de transmission 1 peut coopérer avec un anneau d'arrêt 102 afin de bloquer axialement le levier d'actionnement 3. Le levier d'actionnement 3 peut être entraîné en rotation par un arbre d'entraînement 303, l'arbre d'entraînement 303 coopérant en rotation à un arbre rotor d'un moteur électrique, notamment via des engrenages permettant de réaliser une réduction de vitesse. Le levier d'actionnement 3 peut être lié à la tige 39, par exemple via une liaison pivot, de telle sorte qu'une rotation du levier d'actionnement 3 autour de l'axe d'actionnement Y2 entraîne une translation suivant la direction longitudinale X du dispositif de poussée 38.

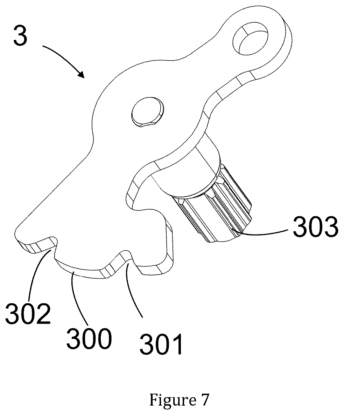

Comme illustré en figure 7, le levier d'actionnement 3 comprend en outre un pourtour externe 300 comportant une première encoche de positionnement angulaire 301 et une deuxième encoche de positionnement angulaire 302. Le levier d'actionnement 3 peut être formé d'une plaque découpée à partir d'une tôle d'épaisseur constante, par exemple une épaisseur comprise entre 3 et 6 mm, le pourtour externe 300 étant obtenu à partir d'une tranche de découpe de la plaque.

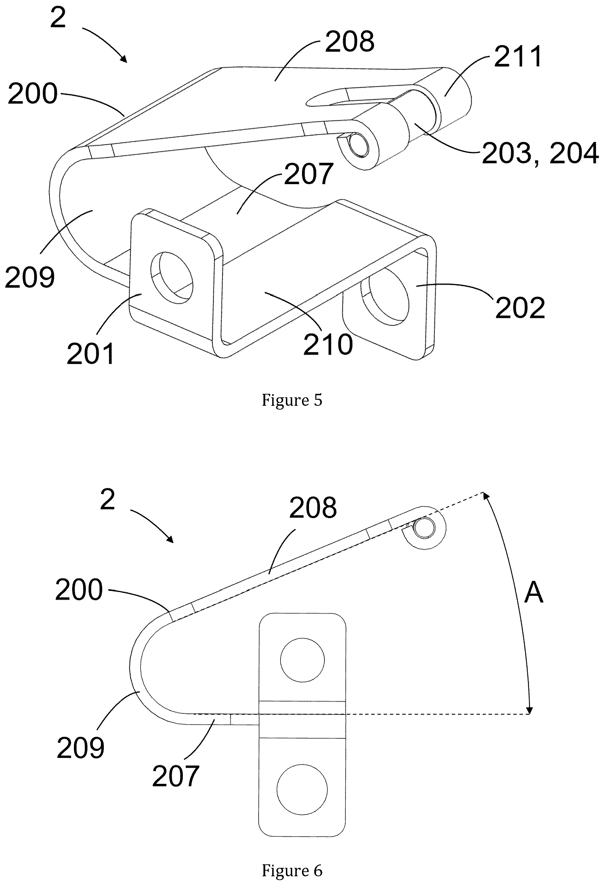

Comme illustré par les figures 3 et 5, l'organe de positionnement 2 coopère avec le pourtour externe du levier d'actionnement 3, l'organe de positionnement 2 comporte une surface d'appui 204 configurée pour s'engager dans la première encoche de positionnement angulaire 301 lorsque le cliquet mobile 34 est en position de verrouillage et dans la deuxième encoche de positionnement angulaire 302 lorsque le cliquet mobile 34 est en position libérée. L'organe de positionnement 2 permet ainsi de maintenir de manière stable et précise la position du mécanisme de blocage en position libérée et/ou en position de verrouillage.

Dans ce mode de réalisation, l'organe de positionnement 2 peut comporter une lame flexible 200 exerçant un effort, directement ou indirectement, sur le pourtour externe 300 du levier d'actionnement 3. Un élément roulant 203, par exemple un rouleau cylindrique, agencé sur la lame flexible 200 peut être configuré pour rouler sur le pourtour externe 300 du levier d'actionnement 3.

L'organe de positionnement 2 est fixé sur le carter de transmission 1 via une première surface de fixation 201 et via une deuxième surface de fixation 202, la première surface de fixation 201 et la deuxième surface de fixation 202 étant décalées l'une de l'autre dans une direction parallèle à l'axe d'actionnement Y2. Comme dans les modes de réalisation représentés sur les figures 3 à 6, la première surface de fixation 201 et la deuxième surface de fixation 202 peuvent être planes et sensiblement perpendiculaires à l'axe d'actionnement Y2. Avantageusement, la première surface de fixation 201 et la deuxième surface de fixation 202 peuvent être réalisées sous forme d'une première patte pliée 201 et d'une deuxième patte pliée 202, les première et deuxième pattes pliées étant pliées à un angle de 90° à partir d'une première portion 210 de la lame flexible 200 et positionnées axialement de part et d'autre de ladite première portion 210 de la lame flexible 200. La première patte pliée 201 peut être pliée dans un sens opposé à la deuxième patte pliée 202.

Comme illustré sur les figures 3 et 4, un premier moyen de fixation 206, ici une goupille de centrage, peut coopérer avec un trou circulaire de la première patte pliée 201 pour limiter le déplacement de l'organe de positionnement 2 par rapport au carter de transmission 1 dans le plan perpendiculaire P à l'axe d'actionnement Y2. Avantageusement, un premier jeu diamétral très faible, typiquement entre 0,05 mm et 0,2 mm, est mis en place entre le trou circulaire et la goupille de centrage. Un deuxième moyen de fixation 205, ici une vis, peut coopérer avec la deuxième patte pliée 202 pour bloquer le déplacement de l'organe de positionnement 2 par rapport au carter de transmission 1 suivant un quatrième axe Y4 parallèle à l'axe d'actionnement Y2.

Comme illustré sur la figure 4, quatre axes peuvent être définis pour réaliser l'assemblage sur le carter de transmission 1 : l'axe d'actionnement Y2 du levier d'actionnement 3, l'axe de pivotement Y1 du cliquet mobile 34, le quatrième axe Y4 suivant lequel la vis 205 peut être assemblée et un troisième axe Y3 suivant lequel la goupille de centrage 206 peut être assemblée. Avantageusement, ces quatre axes peuvent être parallèles, ce qui permet de monter aisément tous ces composants au cours de la même opération d'assemblage.

Comme illustré sur les figures 5 et 6, la lame flexible 200 peut comprendre une forme repliée sur elle-même pour constituer une forme en V. La forme en V peut comprendre une première paroi plane 207 et une deuxième paroi plane 208, un angle de pliage A étant établi entre la première paroi plane 207 et la deuxième paroi plane 208, l'angle de pliage A étant compris de préférence entre 0° et 40°, 30° dans l'exemple de la figure 6. Une paroi incurvée 209 peut relier la première paroi plane 207 et la deuxième paroi plane 208, la paroi incurvée 209 ayant un rayon de courbure compris entre 2 mm et 10 mm, 6,5 mm dans l'exemple de la figure 6. Avantageusement, le rayon de courbure de la paroi incurvée 209 peut être choisi en fonction de l'épaisseur la lame flexible 200 afin d'améliorer le compromis entre la raideur et la contrainte mécanique de celle-ci. Un ratio égal au rapport entre le rayon de courbure et l'épaisseur de la lame flexible 200 peut être établi, le ratio étant compris de préférence entre 2 et 8. Dans l'exemple de la figure 6, l'épaisseur de la lame flexible 200 est de 1,5 mm, le ratio est donc de 4,3.

La lame flexible 200 peut être formée d'un seul tenant dans une bande de matériau métallique. Dans l'exemple de la figure 6, la lame flexible 200 est réalisée à partir d'une bande d'acier qui est découpée par presse pour obtenir ses contours, puis pliée pour obtenir sa forme en V, les première et deuxième pattes pliées 201 et 202, et également une forme complémentaire 211 permettant de constituer une liaison pivot entre le rouleau cylindrique 203 et la lame flexible 200. La lame flexible 200 peut subir ensuite un traitement de durcissement afin d'augmenter sa tenue mécanique.

La première paroi plane 207 et la deuxième paroi plane 208 de la lame flexible 200 peuvent être parallèles à l'axe d'actionnementY2. De plus, la forme de la lame flexible 200, notamment sa forme en V et/ou le choix de la valeur de l'angle de pliage A, peut être choisie de sorte à laisser libre un passage permettant l'assemblage du deuxième moyen de fixation 205 suivant le quatrième axe Y4 et du premier moyen de fixation 206 suivant le troisième axe Y3.

Il est souligné que toutes les caractéristiques, telles qu'elles se dégagent pour un homme du métier à partir de la présente description, des dessins et des revendications attachées, même si concrètement elles n'ont été décrites qu'en relation avec d'autres caractéristiques déterminées, tant individuellement que dans des combinaisons quelconques, peuvent être combinées à d'autres caractéristiques ou groupes de caractéristiques divulguées ici, pour autant que cela n'a pas été expressément exclu ou que des circonstances techniques rendent de telles combinaisons impossibles ou dénuées de sens.

L'usage du verbe « comporter », « comprendre » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Mécanisme de blocage apte à être monté dans un carter de transmission (1) pour bloquer en rotation un arbre d'un véhicule équipé d'au moins un évidement de verrouillage (45), le mécanisme de blocage comprenant :
- un cliquet mobile (34) comprenant un doigt de verrouillage (35), le cliquet mobile (34) étant monté pivotant autour d'un axe de pivotement (Y1) entre une position de verrouillage dans laquelle le doigt de verrouillage (35) est engagé dans l'évidement de verrouillage (45) et une position libérée dans laquelle le doigt de verrouillage (35) est désengagé dudit évidement de verrouillage (45), le cliquet mobile (34) comprenant une surface de came (36) ;
- un dispositif de poussée (38) comportant un suiveur de came (42) apte à se déplacer sur la surface de came (36) afin de déplacer le cliquet mobile (34) de la position libérée vers la position de verrouillage ;
- un levier d'actionnement (3) monté pivotant autour d'un axe d'actionnement (Y2) et configuré pour déplacer le dispositif de poussée (38), le levier d'actionnement (3) comprenant un pourtour externe (300) comportant une première encoche de positionnement angulaire (301) et une deuxième encoche de positionnement angulaire (302) ; et
- un organe de positionnement (2) coopérant avec le pourtour externe (300) du levier d'actionnement (3), l'organe de positionnement (2) comportant une surface d'appui (204) configurée pour s'engager dans la première encoche de positionnement angulaire (301) lorsque le cliquet mobile (34) est en position de verrouillage et dans la deuxième encoche de positionnement angulaire (302) lorsque le cliquet mobile (34) est en position libérée ;
**caractérisé en ce que** l'organe de positionnement (2) comprend une première surface de fixation (201) et une deuxième surface de fixation (202), la première surface de fixation (201) et la deuxième surface de fixation (202) étant décalées l'une de l'autre dans une direction parallèle à l'axe d'actionnement (Y2).

2. Mécanisme de blocage selon la revendication 1, dans lequel l'axe d'actionnement (Y2) du levier d'actionnement (3) est parallèle à l'axe de pivotement (Y1) du cliquet mobile (34).

3. Mécanisme de blocage selon l'une quelconque des revendications précédentes, dans lequel la première surface de fixation (201) et la deuxième surface de fixation (202) sont sensiblement perpendiculaires à l'axe d'actionnement (Y2).

4. Mécanisme de blocage selon l'une quelconque des revendications précédentes, dans lequel le pourtour externe (300) du levier d'actionnement (3) est constitué de surfaces parallèles à l'axe d'actionnement (Y2).

5. Mécanisme de blocage selon l'une quelconque des revendications précédentes, dans lequel l'organe de positionnement (2) comporte une lame flexible (200) exerçant un effort, directement ou indirectement, sur le pourtour externe (300) du levier d'actionnement (3).

6. Mécanisme de blocage selon la revendication 5, dans lequel l'organe de positionnement (2) comporte un élément roulant (203) agencé sur la lame flexible (200), l'élément roulant (203) étant configuré pour rouler sur le pourtour externe (300) du levier d'actionnement (3).

7. Mécanisme de blocage selon la revendication 5 ou 6, dans lequel la première surface de fixation (201) et la deuxième surface de fixation (202) sont réalisées sous forme d'une première patte pliée (201) et d'une deuxième patte pliée (202), les première et deuxième patte pliées (201, 202) étant pliées à un angle de 90° à partir d'une première portion (210) de la lame flexible (200) et positionnées axialement de part et d'autre de ladite première portion (210) de la lame flexible (200).

8. Mécanisme de blocage selon la revendication 7, dans lequel la première patte pliée (201) est pliée dans un sens opposé à la deuxième patte pliée (202).

9. Mécanisme de blocage selon l'une quelconque des revendications précédentes, dans lequel :
- un premier moyen de fixation (206), notamment une goupille de centrage, coopère avec la première surface de fixation (201) pour limiter le déplacement de l'organe de positionnement (2) dans un plan perpendiculaire (P) à l'axe d'actionnement (Y2) ; et
- un deuxième moyen de fixation (205), notamment une vis, coopère avec la deuxième surface de fixation (202) pour bloquer le déplacement de l'organe de positionnement (2) suivant un axe parallèle à l'axe d'actionnement (Y2).

10. Mécanisme de blocage selon la revendication 9 en combinaison avec la revendication 5, dans lequel la lame flexible (200) a une forme configurée pour laisser libre un passage suivant un axe parallèle à l'axe d'actionnement (Y2) permettant l'assemblage du premier et du deuxième moyen de fixation (206, 205).

11. Mécanisme de blocage selon l'une quelconque des revendications 5 à 10, dans lequel la lame flexible (200) comprend une forme repliée sur elle-même pour constituer une forme en V.

12. Mécanisme de blocage selon la revendication 11, dans lequel la forme en V comprend une première paroi plane (207) et une deuxième paroi plane (208), un angle de pliage (A) étant établi entre la première paroi plane (207) et la deuxième paroi plane (208), l'angle de pliage (A) étant compris entre 0° et 80°, l'angle de pliage (A) étant compris de préférence entre 0° et 40°.

13. Mécanisme de blocage selon la revendication 12, dans lequel une paroi incurvée (209) relie la première paroi plane (207) et la deuxième paroi plane (208).

14. Mécanisme de blocage selon les revendications 12 ou 13, dans lequel la première paroi plane (207) et la deuxième paroi plane (208) sont parallèles à l'axe d'actionnement (Y2).

15. Système de transmission comprenant un arbre (44) équipé d'au moins un évidement de verrouillage (45) et un mécanisme de blocage selon l'une quelconque des revendications 1 à 14.
